# EUROPÄISCHE PATENTANMELDUNG

(11) **EP 1 821 068 A2**
(43) Veröffentlichungstag der Anmeldung: **22.08.2007**
(21) Anmeldenummer: 07002170.4
(22) Anmeldetag: 01.02.2007
(51) Int. Cl.: G01C 21/00

(54) **Verfahren zur datenbankgestüzten Schätzung einer Ausgangsgrösse in einem k-dimensionalen Wertebereich**

(30) Priorität: 15.02.2006 DE 102006007006
(71) Anmelder: EADS Deutschland GmbH, 85521 Ottobrunn (DE)
(72) Erfinder: Zecha, Christian, Dr., 82194 Gröbenzell (DE)

(57) **Zusammenfassung**

Die Erfindung betrifft ein Verfahren zur datenbankgestützten Schätzung einer Ausgangsgröße (*̅x̅*̅,*z*) in einem k-dimensionalen Wertebereich, umfassend folgende Verfahrensschritte:
a. Festlegung für ein Element i einer Messreihe {i=1,..,n} einen Aufenthalts-Wahrscheinlichkeitsbereich Rᵢ für die k-dimensionale Ausgangsgröße (*̅x̅*̅,*z*), wobei der Aufenthalts-Wahrscheinlichkeitsbereich Rᵢ durch eine vorgebbare, oder durch eine mit Sensormesswerten parametrisierte, oder durch eine aus einer Datenbank unter Berücksichtigung zusätzlicher Sensormesswerte abgeleitete untere (k-1)-dimensionale Fläche *zᵢ* und durch eine vorgebbare, oder durch eine mit Sensormesswerten parametrisierte, oder durch eine aus einer Datenbank unter Berücksichtigung zusätzlicher Sensormesswerte abgeleitete obere (k-1)-dimensionale Fläche *z̅ᵢ* begrenzt ist,
b. Diskretisierung der unteren und oberen Begrenzungsflächen *zᵢ*, *z̅ᵢ* durch Zuordnung eines unteren Begrenzungswertes *zᵢ*(*̅x̅*̅ᵥ) und eines oberen Begrenzungswertes *z̅ᵢ*(*̅x̅*̅ᵥ) des i-ten Aufenthalts-Wahrscheinlichkeitsbereichs Rᵢ zu jedem Punkt *x̅ᵥ* in einem vorgebbaren (k-1)-dimensionalen Suchgitter, wobei der Index i=1,..,n den jeweiligen Aufenthalts-Wahrscheinlichkeitsbereich Rᵢ und der Index *v* die Punkte im Suchgitter angibt,
c. Zuordnung einer Zahl *wᵢ*(*̅x̅*̅ᵥ) bzw. *w̅ᵢ*(*x̅ᵥ*) jedem Begrenzungswert *zᵢ*(*x̅ᵥ*) bzw. *z̅ᵢ*(*x̅ᵥ*), wobei die Zahl *wᵢ*(*x̅ᵥ*) jeweils angibt, in wie vielen Aufenthalts-Wahrscheinlichkeitsbereichen R_{I} der Punkt (*x̅ᵥ*,*zᵢ*(*x̅ᵥ*)) liegt, und die Zahl *w̅ᵢ*(*x̅ᵥ*) jeweils angibt, in wie vielen Aufenthalts-Wahrscheinlichkeitsbereichen R_{I} der Punkt (*x̅ᵥ*,*z̅ᵢ*(*x̅ᵥ*)) liegt, wobei im Spezialfall n=1 für alle Gitterpunkte *x̅ᵥ* gilt *w*₁(*x̅ᵥ*)=1 und *w̅*₁(*x̅ᵥ*)=1,
d. Bestimmung eines Wahrscheinlichkeitsbereiches S für die zu schätzende Ausgangsgröße (*̅x̅*̅,*z*), in welchem sich mindestens m der n Aufenthalts-Wahrscheinlichkeitsbereiche Rᵢ überlappen, wobei jeder Punkt (*x̅ᵥ*,*zᵢ*(*x̅ᵥ*)) bzw. (*̅x̅*̅,*ᵥ*z̅ᵢ(*x̅ᵥ*)) innerhalb dieses Wahrscheinlichkeitsbereichs S liegt, wenn die dem Begrenzungswert *zᵢ*(*x̅ᵥ*) bzw. *z̅ᵢ*(*x̅ᵥ*) zugeordnete Zahl *wᵢ*(*x̅ᵥ*) bzw. *w̅ᵢ*(*x̅ᵥ*) größer oder gleich m ist, und wobei auch die gesamte Verbindungsstrecke zweier Punkte (*x̅ᵥ*,*zᵢ*(*x̅ᵥ*)), (*x̅ᵥ*,*z̅ⱼ*(*x̅ᵥ*)) innerhalb des Wahrscheinlichkeitsbereichs S liegt, wenn *zᵢ*(*x̅ᵥ*) ≤ *z̅ⱼ*(*x̅ᵥ*), *wᵢ*(*x̅ᵥ*) ≥ *m*, *w̅ⱼ*(*x̅ᵥ*) ≥ *m* gilt und zwischen *zᵢ*(*x̅ᵥ*), *z̅ⱼ*(*x̅ᵥ*) kein Begrenzungswert *zₗ*(*x̅ᵥ*) bzw. *z̅ₗ*(*x̅ᵥ*) mit *wₗ*(*x̅ᵥ*) *≤ m* bzw *w̅ₗ*(*x̅ᵥ*) *≤ m* existiert.

## Beschreibung

Die Erfindung betrifft ein Verfahren zur datenbankgestützten Schätzung einer Ausgangsgröße gemäß Patentanspruch 1.

Bei der Terrain Referenced Navigation handelt es sich bekanntermaßen um ein Navigations-Verfahren, bei dem mittels eines Stückes des Geländeprofils des jeweils überflogenen Gebietes, der Flugstrecke, die aktuelle Position des Flugzeugs unter Verwendung eines digitalen Geländemodells bestimmt wird und für die Navigation zur Verfügung gestellt wird. Hierbei wird mittels eines Sensors die Höhe des Flugzeugs über dem Gelände bestimmt.
Ein Stück des Geländeprofils mit einer Mindestlänge wird zuerst vorverarbeitet, bevor diese Daten für den eigentlichen Positionsbestimmungs-Algorithmus bereitgestellt werden können.
Der Positionsbestimmungs-Algorithmus verwendet das übergebene Stück Geländeprofil und vergleicht es mit den abgespeicherten Geländedaten seines Digitalen Geländemodells. Hierbei wird das Profil in einer Matrix in mehreren Schritten gleichmäßig in Ost- und West-, sowie in Nord- und Süd-Richtung von einer angenommen Position aus verschoben.
(http://de.wikipedia.org/wiki/Terrain Referenced Navigation).

Die wahrscheinlichste horizontale und vertikale Position des Flugzeugs wird dann in Form eines räumlichen Überlappungsbereichs bestimmt, in welchem sich eine vorgebbare Anzahl m von Aufenthalts-Wahrscheinlichkeitsbereichen des Flugzeugs überlappen. Mit der wahrscheinlichsten Position des Flugzeugs ist insbesondere die Höhe des Flugzeugs über dem Gelände verknüpft.
Zur Bestimmung eines derartigen 3-dimensionalen Überlappungsbereichs einer Vielzahl komplex geformter Aufenthalts-Wahrscheinlichkeitsbereiche des Flugzeugs wird der gesamte Raum mit einem 3-dimensionalen Gitter überzogen. Für jeden Gitterpunkt wird dann abgezählt, in wie vielen Aufenthalts-Wahrscheinlichkeitsbereichen er enthalten ist.

Dieser Weg, der im Wesentlichen darin besteht, ein diskretes 3-dimensionales Gitter abzusuchen, ist zum einen sehr zeitaufwendig, da die Anzahl der abzusuchenden Gitterpunkte im allgemeinen sehr groß ist. Zum anderen ist die Genauigkeit, mit welcher der Überlappungsbereich aufgelöst werden kann, durch die Feinheit des Gitters bestimmt. Dabei erlaubt ein feineres Gitter zwar eine bessere Genauigkeit, dies jedoch auf Kosten des Zeitaufwands.

Die Aufgabe der Erfindung besteht darin, ein verbessertes Verfahren zur datenbankgestützten Schätzung einer Ausgangsgröße in einem k-dimensionaler Wertebereich anzugeben.

Diese Aufgabe wird mit dem Verfahren gemäß den Merkmalen des geltenden Patentanspruchs 1 gelöst. Vorteilhafte Ausgestaltungen der Erfindung sind Gegenstand von Unteransprüchen.

Erfindungsgemäß umfasst das Verfahren zur datenbankgestützten Schätzung einer Ausgangsgröße (*̅x̅*̅,*z*) in einem k-dimensionalen Wertebereich folgende Verfahrensschritte:
a. Festlegung für ein Element i einer Messreihe {i=1,..,n} einen Aufenthalts-Wahrscheinlichkeitsbereich Rᵢ für die k-dimensionale Ausgangsgröße (*̅x̅*̅,*z*), wobei der Aufenthalts-Wahrscheinlichkeitsbereich Rᵢ durch eine vorgebbare, oder durch eine mit Sensormesswerten parametrisierte, oder durch eine aus einer Datenbank unter Berücksichtigung zusätzlicher Sensormesswerte abgeleitete untere (k-1)-dimensionale Fläche *zᵢ* und durch eine vorgebbare, oder durch eine mit Sensormesswerten parametrisierte, oder durch eine aus einer Datenbank unter Berücksichtigung zusätzlicher Sensormesswerte abgeleitete obere (k-1)-dimensionale Fläche *z̅ᵢ* begrenzt ist,
b. Diskretisierung der unteren und oberen Begrenzungsflächen *zᵢ, z̅ᵢ* durch Zuordnung eines unteren Begrenzungswertes *zᵢ*(*x̅ᵥ*) und eines oberen Begrenzungswertes *z̅ᵢ*(*x̅ᵥ*) des i-ten Aufenthalts-Wahrscheinlichkeitsbereichs Rᵢ zu jedem Punkt *x̅ᵥ* in einem vorgebbaren (k-1)-dimensionalen Suchgitter, wobei der Index i=1,..,n den jeweiligen Aufenthalts-Wahrscheinlichkeitsbereich Rᵢ und der Index *v* die Punkte im Suchgitter angibt,
c. Zuordnung einer Zahl *wᵢ*(*x̅ᵥ*) bzw. *w̅ᵢ*(*x̅ᵥ*) jedem Begrenzungswert *zᵢ*(*x̅ᵥ*) bzw. *z̅ᵢ*(*x̅ᵥ*), wobei die Zahl *wᵢ*(*x̅ᵥ*) jeweils angibt, in wie vielen Aufenthalts-Wahrscheinlichkeitsbereichen Rₗ der Punkt (*x̅ᵥ,zᵢ*(*x̅ᵥ*)) liegt, und die Zahl *w̅ᵢ*(*x̅ᵥ*) jeweils angibt, in wie vielen Aufenthalts-Wahrscheinlichkeitsbereichen Rₗ der Punkt (*x̅ᵥ*,*z̅ᵢ*(*x̅ᵥ*)) liegt, wobei im Spezialfall n=1 für alle Gitterpunkte *x̅ᵥ* gilt *w*₁(*x̅ᵥ*)=1 und *w̅*₁(*x̅ᵥ*)=1,
d. Bestimmung eines Wahrscheinlichkeitsbereiches S für die zu schätzende Ausgangsgröße (*̅x̅*̅,*z*), in welchem sich mindestens m der n Aufenthalts-Wahrscheinlichkeitsbereiche Rᵢ überlappen, wobei jeder Punkt (*x̅ᵥ*,*zᵢ*(*x̅ᵥ*)) bzw. (*x̅ᵥ*,*z̅ᵢ*(*x̅ᵥ*)) innerhalb dieses Wahrscheinlichkeitsbereichs S liegt, wenn die dem Begrenzungswert *zᵢ*(*x̅ᵥ*) bzw. *z̅ᵢ*(*x̅ᵥ*) zugeordnete Zahl *wᵢ*(*x̅ᵥ*) bzw. *w̅ᵢ*(*x̅ᵥ*) größer oder gleich m ist, und wobei auch die gesamte Verbindungsstrecke zweier Punkte (*x̅ᵥ*,*zᵢ*(*x̅ᵥ*)), (*x̅ᵥ*,*z̅ⱼ*(*x̅ᵥ*)) innerhalb des Wahrscheinlichkeitsbereichs S liegt, wenn *zᵢ*(*x̅ᵥ*)≤*z̅ⱼ*(*x̅ᵥ*), *wᵢ*(*x̅ᵥ*)≥*m*, *w̅ⱼ*(*x̅ᵥ*)*≥m* gilt und zwischen *zᵢ*(*x̅ᵥ*), *z̅ⱼ*(*x̅ᵥ*) kein Begrenzungswert *zₗ*(*x̅ᵥ*) bzw. *z̅ₗ*(*x̅ᵥ*) mit *wₗ*(*x̅ᵥ*) ≤ m bzw *w̅ₗ*(*x̅ᵥ*) ≤ *m* existiert.

Bricht das Verfahren bei einer vorgebbaren Anzahl n von Aufenthalts-Wahrscheinlichkeitsbereichen ab, so kann für jeden Punkt *x̅ᵥ* des (k-1)-dimensionalen Suchgitters die Anzahl der sich überlappenden Aufenthalts-Wahrscheinlichkeitsbereiche unmittelbar aus den Zahlen *w̅ᵢ*(*x̅ᵥ*) und *wᵢ*(*x̅ᵥ*) abgelesen werden.

In dem erfindungsgemäßen Verfahren wird zunächst eine Dimension des k-dimensionalen Suchraums absepariert. Damit ist eine erhebliche Reduzierung der Rechenzeit verknüpft.

Der entstehende (k-1)-dimensionale Suchraum wird demnach mit einem (k-1)-dimensionalen Suchgitter {*x̅ᵥ*} überzogen. Ein solches (k-1)-dimensionales Suchgitter ist im Allgemeinen erforderlich, solange die einzelnen Aufenthalts-Wahrscheinlichkeitsbereiche Rᵢ beliebig komplexe Formen annehmen können, d.h. solange die Begrenzungsflächen *zᵢ* und *z̅ᵢ* beliebig geformt sein können.

Für den speziellen 3-dimensionalen Fall bedeutet dies, dass eine Raumdimension, zweckmäßig die Dimension der direkten Messgröße, absepariert wird. Für das Beispiel der Positionsbestimmung eines Flugzeugs ist dies die Höhe bzw. die z-Dimension in einem kartesischen Koordinatensystem. Die x-y-Ebene wird anschließend mit einem 2-dimensionalen Suchgitter überzogen. Für jeden Punkt (x, y) des 2-dimensionalen Suchgitters wird dann jenes z-Intervall exakt bestimmt, in dem sich mindestens m Raumbereiche überlappen. Eine Diskretisierung in der z-Dimension wird dazu nicht benötigt.
Umfasst im speziellen Fall der 3-dimensionale Raum beispielsweise 1000 Gitterpunkte pro Dimension so wird durch das erfindungsgemäße Verfahren die Rechenzeit um einen Faktor von bis zu 1000 reduziert, da die 1000 Gitterpunkte in z-Richtung nicht abgesucht werden müssen.

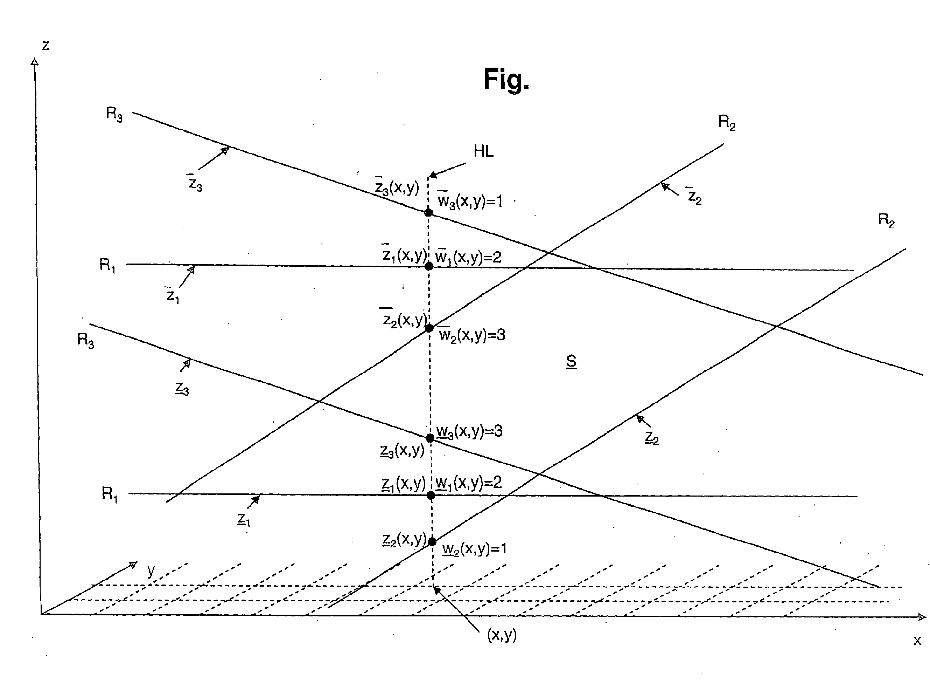

In der einzigen Figur wird die Erfindung für den speziellen 3-dimensionalen Fall beispielhaft erläutert. Die Figur zeigt ein kartesisches Koordinatensystem, in welchem die x-y-Ebene mit einem 2-dimensionalen diskreten Suchgitter überzogen ist. In der Figur sind ferner beispielhaft 3 Aufenthalts-Wahrscheinlichkeitsbereiche R₁, R₂ und R₃ dargestellt. Die Form der Aufenthalts-Wahrscheinlichkeitsbereiche R₁, R₂ und R₃ ist beispielhaft planparallel gewählt. Selbstverständlich können die Aufenthalts-Wahrscheinlichkeitsbereiche R₁, R₂ und R₃ jede beliebige Form im 3-dimensionalen Raum einnehmen.
Sei S jener Bereich, in dem sich alle Wahrscheinlichkeitsbereiche R₁, R₂ und R₃ überlappen. Die einzelnen Wahrscheinlichkeitsbereiche R₁, R₂ und R₃ sind jeweils begrenzt durch ihre oberen Flächen *z̅ᵢ*(*x*,*y*) und unteren Flächen *zᵢ*(*x,y*) mit i=1, 2, 3. Die oberen Flächen *z̅ᵢ*(*x*,*y*) und unteren Flächen *zᵢ*(*x*,*y*) sind zur besseren Veranschaulichung parallel dargestellt. Selbstverständlich können die jeweiligen oberen Flächen *z̅ᵢ*(*x*,*y*) und unteren Flächen *zᵢ*(*x*,*y*) jeweils eine beliebige Form und einen beliebigen Verlauf zueinander aufweisen.

Vom Punkt (x,y) in der x-y-Ebene verläuft parallel zur z-Achse eine Hilfslinie HL. Diese Hilfslinie HL dient lediglich der besseren Darstellung und zeigt die senkrechte Projektion des Punktes (x,y) auf die Flächen *z̅ᵢ* und *zᵢ*. Die Hilfslinie HL schneidet die Flächen *z̅ᵢ* und *zᵢ* der einzelnen Wahrscheinlichkeitsbereiche R₁, R₂ und R₃ in den Punkten *z̅ᵢ*(*x*,*y*) und *zᵢ*(*x*,*y*). Jedem Punkt *z̅ᵢ*(*x*,*y*) ist dabei eine Zahl *w̅ᵢ*(*x*,*y*) und jedem Punkt *zᵢ*(*x*,*y*) eine Zahl *wᵢ*(*x*,*y*) zugeordnet. Jede Zahl *w̅ᵢ*(*x*,*y*) gibt dabei an, in wie vielen Wahrscheinlichkeitsbereichen Rᵢ der jeweilige Punkt *z̅ᵢ*(*x*,*y*) liegt. Und jede Zahl *wᵢ*(*x*,*y*) gibt dabei an, in wie vielen Wahrscheinlichkeitsbereichen Rᵢ der jeweilige Punkt *zᵢ*(*x*,*y*) liegt.
Aus der Figur wird deutlich, dass beispielsweise der Punkt *z̅*₂(*x*,*y*) in allen 3 Wahrscheinlichkeitsbereichen R₁ bis R₃ liegt, womit die dem Punkt zugeordnete Zahl *w̅*₂(*x*,*y*) einen Wert 3 hat. Der Punkt *z*₂(*x*,*y*) liegt allerdings nur im Wahrscheinlichkeitsbereich R₂. Die dem Punkt *z*₂(*x*,*y*) zugeordnete Zahl *w*₂(*x*,*y*) hat somit den Wert 1.
Gleichzeitig liegt der gesamte Wertebereich zwischen den Punkten *z*₃(*x,y*) und *z̅*₂(*x*,*y*), beide mit einer zugehörigen Wertzahl 3, im Überlappungsbereich S der drei Aufenthalts-Wahrscheinlichkeitsbereiche R₁ bis R₃. Hieraus wird deutlich, dass der Überlappungsbereich in der abseparierten z-Dimension, hier das Intervall zwischen den Punkten *z*₃(*x*,*y*) und *z̅*₂(*x*,*y*), nicht näherungsweise bestimmt wird, z.B durch Diskretisierung der z-Dimension, sondern exakt bestimmt wird durch Berechnung der Zahlen *zᵢ*(*x*,*y*), *wᵢ*(*x*,*y*) und *z̅ᵢ*(*x*,*y*), *w̅ᵢ*(*x*,*y*).

In einer vorteilhaften Ausführung der Erfindung ist das Verfahren ein rekursives Verfahren, welches erlaubt, ausgehend von n=1 neue Raumbereiche Rₙ₊₁, z.B. als Folge neuer Messungen, in das Verfahren mit einzubeziehen, ohne dass das Verfahren von Beginn an neu gestartet werden muss.

In einer ersten vorteilhaften Ausführung wird den bereits vorhandenen Aufenthalts-Wahrscheinlichkeitsbereichen Rᵢ, i=1, ...,n ein weiterer Aufenthalts-Wahrscheinlichkeitsbereich Rₙ₊₁ gemäß folgender rekursiver Verfahrensschritte hinzugefügt, wobei die Verfahrensschritte a1)- f1) für jeden Gitterpunkt *x̅ᵥ* durchgeführt werden:
a1. Diskretisierung der unteren und oberen Begrenzungsflächen *z*_{*n*+1}, *z̅*_{*n*+1} des (n+1)-ten Aufenthalts-Wahrscheinlichkeitsbereichs Rₙ₊₁ durch Zuordnung eines unteren Begrenzungswertes *z*_{*n*+1}(*x̅ᵥ*) und eines oberen Begrenzungswertes *z̅*_{*n*+1}(*x̅ᵥ*) zu dem Gitterpunkt *x̅ᵥ*,
b1. Zuordnung einer Zahl *w*_{*n*+1}(*x̅ᵥ*) bzw. *w̅*_{*n*+1}(*x̅ᵥ*) jedem Begrenzungswert *z*_{*n*+1}(*x̅ᵥ*) bzw. *z̅*_{*n*+1}(*x̅ᵥ*), jeweils versehen mit dem Initialisierungswert *w*_{*n*+1}(*x̅ᵥ*)=1 bzw. *w̅*_{*n*+1}(*x̅ᵥ*)=1,
c1. für jedes *i =* 1, ..., n , für welches die Beziehung *zᵢ*(*x̅ᵥ*) < *z*_{*n*+1}(*x̅ᵥ*) erfüllt ist, Inkrementierung von *w*_{*n*+1}(*x̅ᵥ*) um 1, andernfalls Inkrementierung von *wᵢ*(*x̅ᵥ*) um 1,
d1. für jedes *i =* 1, ..., n , für welches die Beziehung *z̅ᵢ*(*x̅ᵥ*)<*z*_{*n*+1}(*x̅ᵥ*) erfüllt ist, Dekrementierung von *w*_{*n+*1}(*x̅ᵥ*) um 1, andernfalls Inkrementierung von *w̅ᵢ*(*x̅ᵥ*) um 1,
e1. für jedes *i*= 1, ..., n , für welches die Beziehung *zᵢ*(*x̅ᵥ*)<*z̅*_{*n*+1}(*x̅ᵥ*) erfüllt ist, Inkrementierung von *w̅*_{*n*+1}(*x̅ᵥ*) um 1, andernfalls Dekrementierung von *wᵢ*(*x̅ᵥ*) um 1,
f1. für jedes *i =* 1, ..., n , für welches die Beziehung *z̅ᵢ*(*x̅ᵥ*) < *z̅*_{*n+*1}(*x̅ᵥ*) erfüllt ist, Dekrementierung von *w̅*_{*n*+1}(*x̅ᵥ*) um 1, andernfalls Dekrementierung von *w̅ᵢ*(*x̅ᵥ*) um 1.

In einer zweiten vorteilhaften Ausführung wird den bereits vorhandenen Aufenthalts-Wahrscheinlichkeitsbereichen Rᵢ, i=1, ...,n ein weiterer Aufenthalts-Wahrscheinlichkeitsbereich Rₙ₊₁ gemäß folgender rekursiver Verfahrensschritte hinzugefügt wird, wobei die Verfahrensschritte a1)- f1) für jeden Gitterpunkt *x̅ᵥ* durchgeführt werden:
a1. Diskretisierung der unteren und oberen Begrenzungsflächen *z*_{*n*+1}, *z̅*_{*n*+1} des (n+1)-ten Aufenthalts-Wahrscheinlichkeitsbereichs Rₙ₊₁ durch Zuordnung eines unteren Begrenzungswertes *z*_{*n*+1}(*x̅ᵥ*) und eines oberen Begrenzungswertes *z̅*_{*n*+1}(*x̅ᵥ*) zu dem Gitterpunkt *x̅ᵥ*,
b1. Zuordnung einer Zahl *w*_{*n*+1}(*x̅ᵥ*) bzw. *w̅*_{*n*+1}(*x̅ᵥ*) jedem Begrenzungswert *z*_{*n*+1}(*x̅ᵥ*) bzw. *z̅*_{*n*+1}(*x̅ᵥ*), jeweils versehen mit dem Initialisierungswert *w*_{*n*+1}(*x̅ᵥ*)=1 bzw. *w̅*_{*n*+1}(*x̅ᵥ*) = 1,
c1. für jedes *i =* 1, ..., *n ,* für welches die Beziehung *zᵢ*(*x̅ᵥ*) < *z*_{*n*+1}(*x̅ᵥ*) erfüllt ist, Dekrementierung von *wᵢ*(*x̅ᵥ*) um 1, andernfalls Dekrementierung von *w*_{*n*+1}(*x̅ᵥ*) um 1,
d1. für jedes *i =* 1, ..., n , für welches die Beziehung *z̅ᵢ*(*x̅ᵥ*) < *z*_{*n*+1}(*x̅ᵥ*) erfüllt ist, Dekrementierung von *w̅ᵢ*(*x̅ᵥ*) um 1, andernfalls Inkrementierung von *w*_{*n*+1}(*x̅ᵥ*) um 1,
e1. für jedes *i =* 1, ..., *n ,* für welches die Beziehung *zᵢ*(*x̅ᵥ*) < *z̅*_{*n*+1}(*x̅ᵥ*) erfüllt ist, Inkrementierung von *wᵢ*(*x̅ᵥ*) um 1, andernfalls Dekrementierung von *w̅*_{*n*+1}(*x̅ᵥ*) um 1,
f1. für jedes *i* = 1, ..., *n* , für welches die Beziehung *z̅ᵢ*(*x̅ᵥ*) < *z̅*_{*n+*1}(*x̅ᵥ*) erfüllt ist, Inkrementierung von *w̅ᵢ*(*x̅ᵥ*) um 1, andernfalls Inkrementierung von *w̅*_{*n*+1}(*x̅ᵥ*) um 1.

In den beiden Alternativen werden die Schritte a1)-f1) ausgehend von n=1 so lange durchlaufen, wie Aufenthalts-Wahrscheinlichkeitsbereiche Rₙ₊₁, z.B. im Laufe einer Messreihe hinzukommen. Zweckmäßig ist hierbei die Reihenfolge, in der die Schritte c1)-f1) ablaufen, beliebig.

In einer vorteilhaften Ausführung der Erfindung werden die Verfahrensschritte a), b), c), d), e) und die Verfahrensschritte a1), b1), c1), d1), e1), f1) der ersten oder zweiten Alternative ganz oder teilweise nach Beendigung der Messreihe durchgeführt.

In einer weiteren vorteilhaften Ausführung der Erfindung werden die Verfahrensschritte a), b), c), d), e) und die Verfahrensschritte a1), b1), c1), d1), e1), f1) der ersten oder zweiten Alternative ganz oder teilweise während der Durchführung der Messreihe durchgeführt. Dadurch kann das Ergebnis (der Wahrscheinlichkeitsbereich S der zu schätzenden Ausgangsgröße) am Ende der Messreihe mit minimaler Zeitverzögerung bereitgestellt werden.

Ein Vorteil des rekursiven Verfahrens ist, dass die Anzahl n der Aufenthalts-Wahrscheinlichkeitsbereiche zu Beginn des Verfahrens bzw. der Messreihe noch nicht festgelegt sein muss, sondern im Lauf der Messreihe angepasst werden kann.

Das erfindungsgemäße Verfahren ist speziell geeignet für Echtzeitanwendungen, bei denen z.B. im Laufe einer Messreihe sukzessive neue Aufenthalts-Wahrscheinlichkeitsbereiche hinzukommen. Eine solche Situation liegt z.B. beim TRN vor, wo typischerweise im Sekundenabstand neue Aufenthalts-Wahrscheinlichkeitsbereiche in Form von Raumgebieten, in welchen sich das Flugzeug aufhält, durch die Messung generiert werden.

Ein weiterer Vorteil besteht darin, dass die Messreihe zu einem beliebigen Zeitpunkt abgebrochen werden kann. Dies erlaubt es z.B. die Länge der Messreihe dynamisch an andere, auch zeitlich veränderliche Parameter, wie z.B. an die Fluggeschwindigkeit im Rahmen des TRN, anzupassen.

Schließlich ist das erfindungsgemäße Verfahren in der Lage, den Überlappungsbereich zumindest in einer Dimension, z.B. der z-Dimension, exakt zu bestimmen, weil in dieser Richtung keine Diskretisierung erfolgt.

Das erfindungsgemäße Verfahren ist nicht auf die datenbankgestützte Positionsbestimmung von Flugzeugen im TRN-Verfahren beschränkt. Das Verfahren kann auch in anderen Anwendungsgebieten zum Einsatz kommen, z.B. in der Vermessung von Graustufenmustern in der automatischen Bildverarbeitung oder in der geometrischen Vermessung von Bauteilen in der Qualitätskontrolle.

## Patentansprüche

1. Verfahren zur datenbankgestützten Schätzung einer Ausgangsgröße (*̅x̅*̅,*z*) in einem k-dimensionalen Wertebereich, umfassend folgende Verfahrensschritte:
a. Festlegung für ein Element i einer Messreihe {i=1,..,n} einen Aufenthalts-Wahrscheinlichkeitsbereich Rᵢ für die k-dimensionale Ausgangsgröße (*̅x̅*̅,*z*), wobei der Aufenthalts-Wahrscheinlichkeitsbereich Rᵢ durch eine vorgebbare, oder durch eine mit Se rmesswerten parametrisierte, oder durch eine aus einer Datenbank unter Berücksichtigung zusätzlicher Sensormesswerte abgeleitete untere (k-1)-dimensionale Fläche *zᵢ* und durch eine vorgebbare, oder durch eine mit Sensormesswerten parametrisierte, oder durch eine aus einer Datenbank unter Berücksichtigung zusätzlicher Sensormesswerte abgeleitete obere (k-1)-dimensionale Fläche *z̅ᵢ* begrenzt ist,
b. Diskretisierung der unteren und oberen Begrenzungsflächen *zᵢ, z̅ᵢ* durch Zuordnung eines unteren Begrenzungswertes *zᵢ*(*x̅ᵥ*) und eines oberen Begrenzungswertes *z̅ᵢ*(*x̅ᵥ*) des i-ten Aufenthalts-Wahrscheinlichkeitsbereichs Rᵢ zu jedem Punkt *x̅ᵥ* in einem vorgebbaren (k-1)-dimensionalen Suchgitter, wobei der Index i=1,..,n den jeweiligen Aufenthalts-Wahrscheinlichkeitsbereich Rᵢ und der Index *v* die Punkte im Suchgitter angibt,
c. Zuordnung einer Zahl *wᵢ*(*x̅ᵥ*) bzw. *w̅ᵢ*(*x̅ᵥ*) jedem Begrenzungswert *zᵢ*(*x̅ᵥ*) bzw. *z̅ᵢ*(*x̅ᵥ*), wobei die Zahl *wᵢ*(*x̅ᵥ*) jeweils angibt, in wie vielen Aufenthalts-Wahrscheinlichkeitsbereichen Rₗ der Punkt (*x̅ᵥ,zᵢ*(*x̅ᵥ*)) liegt, und die Zahl *w̅ᵢ*(*x̅ᵥ*) jeweils angibt, in wie vielen Aufenthalts-Wahrscheinlichkeitsbereichen Rₗ der Punkt (*x̅ᵥ,z̅ᵢ*(*x̅ᵥ*)) liegt, wobei im Spezialfall n=1 für alle Gitterpunkte *x̅ᵥ* gilt *w*₁(*x̅ᵥ*)=1 und *w̅*₁(*x̅ᵥ*)=1,
d. Bestimmung eines Wahrscheinlichkeitsbereiches S für die zu schätzende Ausgangsgröße (*̅x̅*̅,*z*), in welchem sich mindestens m der n Aufenthalts-Wahrscheinlichkeitsbereiche Rᵢ überlappen, wobei jeder Punkt (*x̅ᵥ*,*zᵢ*(*x̅ᵥ*)) bzw. (*x̅ᵥ*,*z̅ᵢ*(*x̅ᵥ*)) innerhalb dieses Wahrscheinlichkeitsbereichs S liegt, wenn die dem Begrenzungswert *zᵢ*(*x̅ᵥ*) bzw. *z̅ᵢ*(*x̅ᵥ*) zugeordnete Zahl *wᵢ*(*x̅ᵥ*) bzw. *w̅ᵢ*(*x̅ᵥ*) größer oder gleich m ist, und wobei auch die gesamte Verbindungsstrecke zweier Punkte (*x̅ᵥ*,*zᵢ*(*x̅ᵥ*)), (*x̅ᵥ*,*z̅ⱼ*(*x̅ᵥ*)) innerhalb des Wahrscheinlichkeitsbereichs S liegt, wenn *zᵢ*(x̅*ᵥ*)≤*z̅ⱼ*(x̅*ᵥ*), *wᵢ*(x̅*ᵥ*)≥*m*, *w̅ⱼ*(x̅*ᵥ*)≥*m* gilt und zwischen *zᵢ*(x̅*ᵥ*), *z̅ⱼ*(*x̅ᵥ*) kein Begrenzungswert *zₗ*(*x̅ᵥ*) bzw. *z̅ₗ*(*x̅ᵥ*) mit *wₗ*(x̅*ᵥ*)≤*m* bzw *w̅ₗ*(x̅*ᵥ*)≤*m* existiert.

2. Verfahren nach Anspruch 1, wobei den bereits vorhandenen Aufenthalts-Wahrscheinlichkeitsbereichen Rᵢ, i=1, ...,n ein weiterer Aufenthalts-Wahrscheinlichkeitsbereich Rₙ₊₁ gemäß folgender rekursiver Verfahrensschritte hinzugefügt wird, wobei die Verfahrensschritte a1)- f1) für jeden Gitterpunkt *x̅ᵥ* durchgeführt werden:
a1. Diskretisierung der unteren und oberen Begrenzungsflächen *z*_{*n*+1}, *z̅*_{*n*+1} des (n+1)-ten Aufenthalts-Wahrscheinlichkeitsbereichs Rₙ₊₁ durch Zuordnung eines unteren Begrenzungswertes *z*_{*n*+1}(x̅*ᵥ*) und eines oberen Begrenzungswertes *z̅*_{*n*+1}(x̅*ᵥ*) zu dem Gitterpunkt x̅*ᵥ*,
b1.Zuordnung einer Zahl *w*_{*n*+1}(x̅*ᵥ*) bzw. *w̅*_{*n*+1}(x̅*ᵥ*) jedem Begrenzungswert *z*_{*n*+1}(x̅*ᵥ*) bzw. *z̅*_{*n*+1}(x̅*ᵥ*), jeweils versehen mit dem Initialisierungswert *w*_{*n*+1}(x̅*ᵥ*)=1 bzw. *w̅*_{*n*+1}(x̅*ᵥ*)=1,
c1. für jedes *i* = 1, ..., n , für welches die Beziehung *zᵢ*(x̅*ᵥ*) < *z*_{*n*+1}(x̅*ᵥ*) erfüllt ist, Inkrementierung von *w*_{*n*+1}(x̅*ᵥ*) um 1, andernfalls Inkrementierung von *wᵢ*(x̅*ᵥ*) um 1,
d1.für jedes *i =* 1, ..., n , für welches die Beziehung *z̅ᵢ*(x̅*ᵥ*)<*z*_{*n*+1}(x̅*ᵥ*) erfüllt ist, Dekrementierung von *w*_{*n*+1}(x̅*ᵥ*) um 1, andernfalls Inkrementierung von *w̅ᵢ*(x̅*ᵥ*) um 1,
e1. für jedes *i* = 1, ..., n , für welches die Beziehung *zᵢ*(x̅*ᵥ*) < z̅_{*n*+1}(x̅*ᵥ*) erfüllt ist, Inkrementierung von *w̅*_{*n*+1}(x̅*ᵥ*) um 1, andernfalls Dekrementierung von *wᵢ*(x̅*ᵥ*) um 1,
f1. für jedes *i* = 1, ..., n , für welches die Beziehung *z̅ᵢ*(x̅*ᵥ*)<*z̅*_{*n*+1}(x̅*ᵥ*) erfüllt ist, Dekrementierung von *w̅*_{*n*+1}(x̅*ᵥ*) um 1, andernfalls Dekrementierung von *w̅ᵢ*(x̅*ᵥ*) um 1.

3. Verfahren nach Anspruch 1, wobei den bereits vorhandenen Aufenthalts-Wahrscheinlichkeitsbereichen Rᵢ , i=1, ...,n ein weiterer Aufenthalts-Wahrscheinlichkeitsbereich Rₙ₊₁ gemäß folgender rekursiver Verfahrensschritte hinzugefügt wird, wobei die Verfahrensschritte a1)- f1) für jeden Gitterpunkt *x̅ᵥ* durchgeführt werden:
a1. Diskretisierung der unteren und oberen Begrenzungsflächen *z*_{*n*+1}, *z̅*_{*n*+1} des (n+1)-ten Aufenthalts-Wahrscheinlichkeitsbereichs Rₙ₊₁ durch Zuordnung eines unteren Begrenzungswertes *z*_{*n*+1}(*x̅ᵥ*) und eines oberen Begrenzungswertes *z̅*_{*n*+1}(*x̅ᵥ*) zu dem Gitterpunkt *x̅ᵥ*,
b1. Zuordnung einer Zahl *w*_{*n*+1}(*x̅ᵥ*) bzw. *w̅*_{*n*+1}(*x̅ᵥ*) jedem Begrenzungswert *z*_{*n*+1}(*x̅ᵥ*) bzw. *z̅*_{*n*+1}(*x̅ᵥ*), jeweils versehen mit dem Initialisierungswert *w*_{*n+*1}(*x̅ᵥ*)=1 bzw. *w̅*_{*n*+1}(*x̅ᵥ*)=1,
c1. für jedes *i* = 1, ..., *n ,* für welches die Beziehung *zᵢ*(*x̅ᵥ*)<*z*_{*n*+1}(*x̅ᵥ*) erfüllt ist, Dekrementierung von *wᵢ*(*x̅ᵥ*) um 1, andernfalls Dekrementierung von *w*_{*n*+1}(*x̅ᵥ*) um 1,
d1. für jedes *i* = 1, ..., *n ,* für welches die Beziehung *z̅ᵢ*(*x̅ᵥ*)*<z*_{*n*+1}(*x̅ᵥ*) erfüllt ist, Dekrementierung von *w̅ᵢ*(*x̅ᵥ*) um 1, andernfalls Inkrementierung von *w*_{*n*+1}(*x̅ᵥ*) um 1,
e1. für jedes *i* = 1, ..., *n ,* für welches die Beziehung *zᵢ*(*x̅ᵥ*)<*z̅*_{*n*+1}(*x̅ᵥ*) erfüllt ist, Inkrementierung von *wᵢ*(*x̅ᵥ*) um 1, andernfalls Dekrementierung von *w̅*_{*n*+1}(*x̅ᵥ*) um 1,
f1. für jedes *i* = 1, ..., *n*, für welches die Beziehung *z̅ᵢ*(*x̅ᵥ*)<*z̅*_{*n*+1}(*x̅ᵥ*) erfüllt ist, Inkrementierung von *w̅ᵢ*(*x̅ᵥ*) um 1, andernfalls Inkrementierung von *w̅*_{*n*+1}(*x̅ᵥ*) um 1.

4. Verfahren nach Anspruch 2, wobei die Verfahrensschritte c1), d1), e1), f1) in beliebiger Reihenfolge durchgeführt werden.

5. Verfahren nach Anspruch 3, wobei die Verfahrensschritte c1), d1), e1), f1) in beliebiger Reihenfolge durchgeführt werden.

6. Verfahren nach Anspruch 2 oder 3, wobei die Verfahrensschritte a), b), c), d), e) und die Verfahrensschritte a1), b1), c1), d1), e1), f1) ganz oder teilweise nach Beendigung der Messreihe durchgeführt werden.

7. Verfahren nach Anspruch 2 oder 3, wobei die Verfahrensschritte a), b), c), d), e) und die Verfahrensschritte a1), b1), c1), d1), e1), f1) ganz oder teilweise während der Durchführung der Messreihe durchgeführt werden.
